# FASCICULE DE BREVET EUROPEEN

(11) **EP 0 849 483 B1**
(45) Date de publication et mention de la délivrance du brevet: **13.02.2002**
(21) Numéro de dépôt: 97403061.1
(22) Date de dépôt: 16.12.1997
(51) Int. Cl.: F16D 13/71

(54) **Mécanisme d'embrayage, notamment pour véhicule automobile**
Kupplungsvorrichtung, insbesondere für Kraftfahrzeuge
Clutch device, especially for automotive vehicles

(30) Priorité: 17.12.1996 FR 9615489
(43) Date de publication de la demande: 24.06.1998
(73) Titulaire: VALEO, 75017 Paris (FR)
(72) Inventeur: Dequesnes, Laurent, 80800 Fouilloy (FR)
(74) Mandataire: Gamonal, Didier

(56) Documents cités:
- EP-A- 0 207 597
- DE-A- 2 205 455
- DE-A- 3 441 506
- DE-A- 19 647 974
- FR-A- 2 318 345
- GB-A- 2 197 920
- US-A- 2 183 000

## Description

L'invention concerne les mécanismes d'embrayage. L'invention concerne plus particulièrement les mécanismes d'embrayage tel que décrit dans le document DE-A-3 441 506, et du genre comportant, sous forme de pièces annulaires, un couvercle, qui présente, transversalement, un fond, et, périphériquement, une jupe d'orientation générale axiale, un plateau de pression, qui est monté mobile axialement par rapport au couvercle, et un diaphragme, qui prend appui sur le fond du couvercle et porte élastiquement sur des bossages que présente le plateau de pression, avec, associés au plateau de pression, des moyens de blocage circonférentiel par lesquels il est calé en rotation sur le couvercle, dans lequel les moyens de blocage circonférentiel du plateau de pression appartiennent d'un seul tenant à une pièce auxiliaire rapportée de manière autonome sur ce plateau de pression.

Dans ce document, conforme au préambule de la revendication principale, les moyens de blocage circonférentiel du plateau de pression sont constitués par un fil à ressort.

En variante, il est connu d'associer au plateau de pression des languettes tangentielles, d'une part, pour sa solidarisation en rotation avec l'ensemble, des moyens de blocage circonférentiel, par lesquels il est calé en rotation sur le couvercle, et, d'autre part, pour sa levée au débrayage, des moyens de rappel axial, qui le sollicitent en permanence en direction du fond du couvercle.

Le plus souvent, à ce jour, ces deux fonctions sont assurées conjointement par des languettes, dites languettes tangentielles, qui s'étendent tangentiellement à une même circonférence de l'ensemble, et qui, à l'une de leurs extrémités, sont attelées au plateau de pression, tandis que, à l'autre de leurs extrémités, elles sont attelées au couvercle.

Cette disposition, qui donne satisfaction, a pour inconvénient de conduire à un montage relativement complexe : outre les languettes tangentielles, ce montage nécessite l'intervention de moyens de fixation, tels que rivets ou autres, propres à l'attelage de ces languettes tangentielles à des pattes du plateau de pression et à des auvents du couvercle.

L'invention a pour objet une disposition permettant de simplifier ce montage.

De manière plus précise, elle a pour objet un mécanisme d'embrayage du genre concerné, caractérisé en ce que pour la constitution des moyens de blocage circonférentiel du plateau de pression, la pièce auxiliaire comporte, d'une part, des pattes, par lesquelles elle est calée en rotation sur le couvercle, et, d'autre part, des pattes, par lesquelles elle est calée en rotation sur le plateau de pression.

Autrement dit, suivant l'invention, cette pièce auxiliaire, qui forme par elle-même les moyens de blocage circonférentiel du plateau de pression, ne nécessite avantageusement aucun moyen de fixation particulier pour son assujettissement à ce plateau de pression.

Le plateau de pression peut en outre être ainsi dépourvu de patte, au bénéfice d'une réalisation plus économique.

Tout aussi avantageusement, la pièce auxiliaire suivant l'invention ne nécessite non plus aucun moyen de fixation particulier pour l'intervention des moyens de blocage circonférentiel du plateau de pression.

Par exemple, suivant une forme préférée de réalisation, cette pièce auxiliaire est rapportée par encliquetage sur le plateau de pression, ce qui rend très rapide et aisée sa mise en place sur celui-ci, et, pour la constitution des moyens de blocage circonférentiel de ce plateau de pression, elle comporte, d'une part, des pattes, par lesquelles elle est calée en rotation sur le couvercle, et, d'autre part, des pattes, par lesquelles elle est conjointement calée en rotation sur le plateau de pression.

Le couvercle peut en outre être ainsi dépourvu d'auvent, au bénéfice d'une réalisation plus simple et plus robuste.

Suivant un développement de l'invention, les moyens de rappel axial du plateau de pression peuvent également si désiré appartenir d'un seul tenant à cette pièce auxiliaire.

Par exemple, ces moyens de rappel axial peuvent résulter de ce que cette pièce auxiliaire est élastiquement déformable axialement, cette pièce auxiliaire formant par exemple par elle-même une rondelle Belleville.

En variante, ces moyens de rappel axial peuvent comporter des pattes par lesquelles la pièce auxiliaire est crochetée sur le diaphragme. Dans l'un et l'autre cas, le montage se trouve avantageusement encore simplifié.

En particulier, il peut être avantageusement tiré parti des bossages du plateau de pression pour faciliter l'encliquetage de la pièce auxiliaire sur celui-ci ainsi que pour assurer le blocage en rotation de cette pièce auxiliaire sur ce plateau de pression.

Les caractéristiques et avantages de l'invention ressortiront d'ailleurs de la description qui va suivre, à titre d'exemple, en référence aux dessins schématiques annexés sur lesquels :
la figure 1 est une vue partielle en coupe axiale d'un mécanisme d'embrayage suivant l'invention, suivant la ligne brisée I-I de la figure 3 ;
la figure 2 reprend, à échelle supérieure, le détail de la figure 1 repéré par un encart II sur cette figure 1 ;
la figure 3 est, à l'échelle de la figure 1, et avec des arrachements locaux, une vue partielle en coupe transversale du mécanisme d'embrayage suivant l'invention, suivant la ligne brisée III-III de la figure 1 ;
la figure 4 est, à échelle différente, une vue partielle en perspective de la pièce auxiliaire que comporte suivant l'invention ce mécanisme d'embrayage.

Tel qu'illustré sur ces figures, et de manière connue en soi, le mécanisme d'embrayage 10 suivant l'invention comporte, sous forme de pièces globalement annulaires, un couvercle 11, qui présente, transversalement, un fond 12, et, périphériquement, une jupe 13 d'orientation générale axiale, avec, le long du bord libre de cette jupe 13, un rebord 14 dirigé radialement en direction opposée à l'axe A de l'ensemble, un plateau de pression 15, et un diaphragme 16, qui présente une partie périphérique 17 formant rondelle Belleville et une partie centrale 18 fragmentée en doigts radiaux 19, et qui, par sa partie périphérique 17, prend appui sur le fond 12 du couvercle 11 et porte élastiquement sur le plateau de pression 15, ce plateau de pression 15 présentant circulairement, de place en place, en saillie axiale, pour l'appui de ce diaphragme 16, des bossages 20.

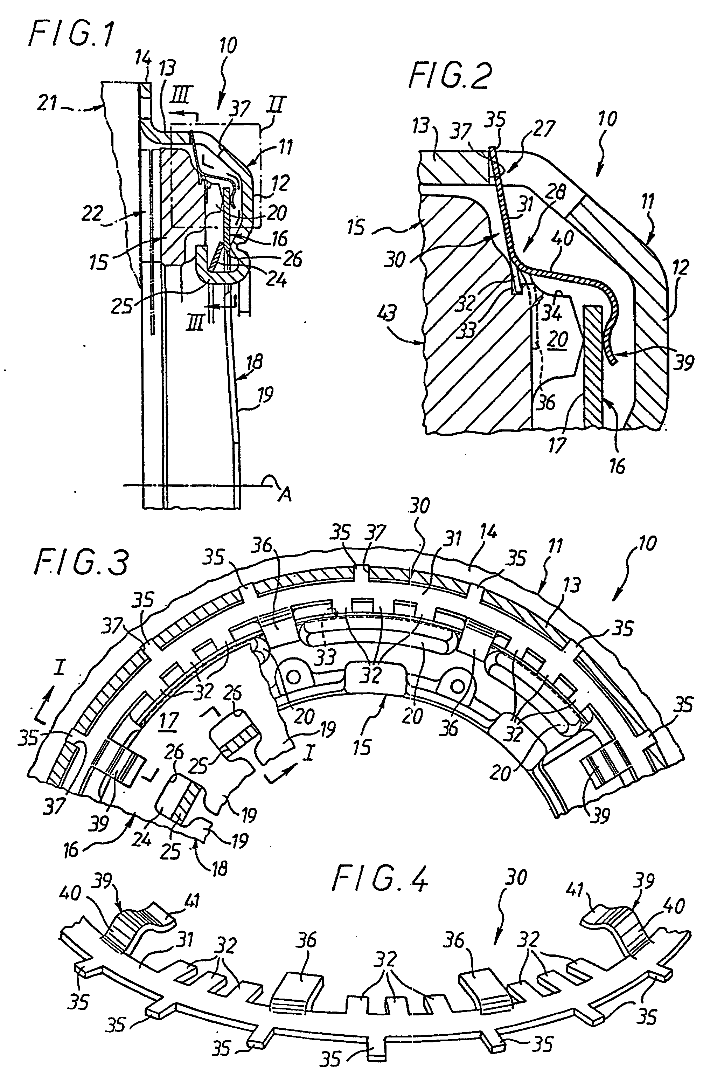

Par le rebord 14 du couvercle 11, ce mécanisme d'embrayage 10 est adapté à être rapporté sur un plateau de réaction 21, ou volant, avec insertion d'un disque de friction 22, tel que schématisé en traits interrompus sur la figure 1.

S'agissant, ici, d'un mécanisme d'embrayage 10 pour embrayage de type poussé, le diaphragme 16 trouve un appui primaire sur le fond 12 du couvercle 11 par la portion de plus petit diamètre de sa partie périphérique 17, et il porte sur les bossages 20 du plateau de pression 15 par la portion de plus grand diamètre de celle-ci.

Du côté opposé au fond 12 du couvercle 11, le diaphragme 16 est ici en outre soumis à une rondelle Belleville 24, qui, au droit de son appui primaire sur ce fond 12, lui fournit un appui secondaire, cette rondelle Belleville 24 trouvant elle-même un appui au creux de pattes 25, qui, venues d'un seul tenant du fond 12 du couvercle 11, traversent axialement le diaphragme 16 à la faveur de passages 26 prévus à cet effet à la racine de ses doigts radiaux 19, et qui, au-delà de ce diaphragme 16, sont pliées en équerre en direction opposée à l'axe A de l'ensemble.

Les dispositions qui précèdent sont bien connues par elles-mêmes, et, ne relevant pas de la présente invention, elles ne seront pas décrites plus en détail ici.

De manière également connue, sont associés au plateau de pression 15, d'une part, des moyens de blocage différentiel 27, par lesquels ce plateau de pression 15 est calé en rotation sur le couvercle 11, et, d'autre part, des moyens de rappel axial 28, qui, pour l'écarter du plateau de réaction 21 au débrayage, et ainsi libérer le disque de friction. 22, sollicitent en permanence ce plateau de pression 15 en direction du fond 12 du couvercle 11.

Suivant l'invention, les moyens de blocage circonférentiel 27 du plateau de pression 15 appartiennent d'un seul tenant à une pièce auxiliaire 30, qui, distincte tant du couvercle 11 que du plateau de pression 15, est rapportée de manière autonome sur ce plateau de pression 15.

Comme le couvercle 11, le plateau de pression 15 et le diaphragme 16, cette pièce auxiliaire 30 est une pièce globalement annulaire, qui s'étend tout autour de l'axe A de l'ensemble, et qui, ici, comporte, de manière circulairement continue, une rondelle 31.

Ici, la pièce auxiliaire 30 est rapportée par encliquetage sur le plateau de pression 15.

A cet effet, elle comporte, de place en place, des pattes d'encliquetage 32, qui s'étendent sensiblement radialement à compter de la périphérie interne de sa rondelle 31, et par lesquelles elle est en prise avec une rainure 33 prévue à cet effet sur le plateau de pression 15.

Ici, cette rainure 33 s'étend à la racine des bossages 20 du plateau de pression 15, et sa concavité est dirigée en direction opposée à l'axe A de l'ensemble.

Ici, elle est circulairement continue, mais, en variante, elle peut être fractionnée en secteurs circulaires, à raison, par exemple, d'un secteur circulaire par bossage 20.

Ici, la rainure 33 est précédée par un profil d'engagement 34, globalement arrondi, et plus précisément concave, formé par celui des flancs des bossages 20 qui est tourné du côté opposé à l'axe A de l'ensemble.

Ici, il est prévu, sur la pièce auxiliaire 30, pour chaque bossage 20 du plateau de pression 15, un groupe de trois pattes d'encliquetage 32, qui sont circonférentiellement échelonnées le long d'un tel bossage 20.

Ces pattes d'encliquetage 32 s'étendent suivant le plan de la rondelle 31, en formant des prolongements locaux de celle-ci.

Pour la constitution des moyens de blocage circonférentiel 27 du plateau de pression 15, la pièce auxiliaire 30 suivant l'invention comporte, ici, d'une part, des pattes 35, par lesquelles elle est calée en rotation sur le couvercle 11, et, d'autre part, des pattes 36, par lesquelles elle est calée en rotation sur le plateau de pression 15.

Ici, les pattes 35 s'étendent à compter de la périphérie externe de la rondelle 31, et elles sont chacune respectivement en prise avec des ouvertures 37 ménagées à cet effet dans la jupe 13 du couvercle 11.

Les pattes 36 s'étendent, elles, à compter de la périphérie interne de la rondelle 31, et elles sont chacune respectivement insérées entre deux bossages 20 du plateau de pression 15.

Comme les pattes d'encliquetage 32, les pattes 35 s'étendent sensiblement suivant le plan de la rondelle 31, en formant des prolongements locaux de celle-ci.

Mais leur nombre est largement inférieur à celui des pattes d'encliquetage 32.

En outre, elles sont, elles, régulièrement réparties circulairement.

Ici, les pattes 36 sont légèrement décalées axialement par rapport à la rondelle 31, en étant plus proches du fond 12 du couvercle 11 que les pattes d'encliquetage 32, et elles ont une longueur largement supérieure à celle de ces dernières.

Leur nombre est également largement inférieur à celui des pattes d'encliquetage 32.

Ici, chaque patte 36 s'étend entre deux groupes de trois pattes d'encliquetage 32.

Ici, les moyens de rappel axial 28 du plateau de pression 15 appartiennent eux aussi d'un seul tenant à la pièce auxiliaire 30 à laquelle appartiennent les moyens de blocage circonférentiel 27.

Par exemple, ces moyens de rappel axial 28 résultent au moins pour partie de ce que la pièce auxiliaire 30 est élastiquement déformable axialement, en formant par exemple par elle-même une rondelle Belleville.

En variante, et/ou en complément, et cela est le cas ici, ces moyens de rappel axial 28 comportent des pattes 39 par lesquelles la pièce auxiliaire 30 est crochetée sur le diaphragme 16.

Ici, ces pattes 39 sont issues de la périphérie interne de la rondelle 31, comme les pattes d'encliquetage 32 et comme les pattes 36.

Comme les pattes 36, elles s'étendent chacune respectivement entre deux groupes de trois pattes d'encliquetage 32, en substitution à des pattes 36.

Mais leur nombre est encore inférieur.

Ici, seules trois pattes 39 sont prévues, sensiblement à 120° deux à deux.

Elles comportent chacune un tronçon 40, qui est sensiblement parallèle à l'axe A de l'ensemble, tout en étant légèrement oblique sur celui-ci, et un tronçon 41, qui s'étend radialement en direction de cet axe A, tout en étant ondulé en S.

Au montage, il peut par exemple être procédé comme suit.

Dans un premier temps, le diaphragme 16 est posé sur les bossages 20 du plateau de pression 15, avec insertion de la rondelle Belleville 24 entre lui et ce plateau de pression 15, et la pièce auxiliaire 30 est alors engagée axialement sur l'ensemble, jusqu'à pénétration de ses pattes d'encliquetage 32 dans la rainure 33 du plateau de pression 15.

Ainsi qu'il est aisé de le comprendre, le profil d'engagement 34 des bossages 20 du plateau de pression 15 facilite avantageusement l'encliquetage correspondant.

Le plateau de pression 15, le diaphragme 16, la rondelle Belleville 24 et la pièce auxiliaire 30 forment alors avantageusement un sous-ensemble 43.

Dans un deuxième temps, ce sous-ensemble 43 est engagé axialement sur les pattes 25, alors droites, du couvercle 11, et ces pattes 25 sont ensuite pliées à l'équerre.

Ainsi, les bossages 20 du plateau de pression 15 permettent de ménager la pièce auxiliaire 30, car le diaphragme 16 ne s'appuie par sur elle.

Outre qu'ils facilitent le montage de la pièce auxiliaire 30, ces bossages 20 en assurent également le blocage en rotation sur le plateau de pression 15.

Par ailleurs, le couvercle 11 est dépourvu d'auvent et le plateau de pression 15 de patte, ce qui simplifie leur fabrication.

Bien entendu, la présente invention ne se limite pas à la forme de réalisation décrite et représentée, mais englobe toute variante d'exécution, dans les limites fixées par les revendications.

## Revendications

1. Mécanisme d'embrayage du genre comportant, sous forme de pièces annulaires, un couvercle (11), qui présente, transversalement, un fond (12), et, périphériquement, une jupe (13) d'orientation générale axiale, un plateau de pression (15), qui est monté mobile axialement par rapport au couvercle (11), et un diaphragme (16), qui prend appui sur le fond (12) du couvercle (11) et porte élastiquement sur des bossages (20) que présente le plateau de pression (15), avec, associés au plateau de pression (15), des moyens de blocage circonférentiel (27) par lesquels il est calé en rotation sur le couvercle (11), dans lequel les moyens de blocage circonférentiel (27) du plateau de pression (15) appartiennent d'un seul tenant à une pièce auxiliaire (30) rapportée de manière autonome sur ce plateau de pression (15) **caractérisée en ce que**, pour la constitution des moyens de blocage circonférentiel (27) du plateau de pression (15), la pièce auxiliaire (30) comporte, d'une part, des pattes (35), par lesquelles elle est calée en rotation sur le couvercle (11), et, d'autre part, des pattes (36), par lesquelles elle est calée en rotation sur le plateau de pression (15).

2. Mécanisme d'embrayage suivant la revendication 1, **caractérisé en ce que** la pièce auxiliaire (30) est une pièce annulaire comportant, de manière circulairement continue, une rondelle (31).

3. Mécanisme d'embrayage suivant la revendication 2, **caractérisé en ce que** la pièce auxiliaire (30) est rapportée par encliquetage sur le plateau de pression (15) à la faveur de pattes d'encliquetage (32), qui s'étendent sensiblement radialement à compter de la périphérie interne de sa rondelle 31.

4. Mécanisme d'embrayage suivant la revendication 3, **caractérisé en ce que** les pattes d'encliquetage (32) viennent en prise avec une rainure (33), éventuellement fractionnée, du plateau de pression (15), ladite rainure ayant une concavité dirigé en direction opposée à l'axe (A) de l'ensemble.

5. Mécanisme d'embrayage selon la revendication 4, **caractérisé en ce que** les pattes d'encliquetage (32) s'étendent suivant le plan de la rondelle (31) de la pièce auxiliaire (30) en formant des prolongements locaux de celle-ci.

6. Mécanisme d'embrayage suivant la revendication 4 ou 5, **caractérisé en ce que** la rainure (33) du plateau de pression (15) est précédée d'un profil d'engagement (34).

7. Mécanisme d'embrayage suivant l'une quelconque des revendications 1 à 6, **caractérisé en ce que** les pattes (35) par lesquelles la pièce auxiliaire (30) est calée en rotation sur le couvercle (11) sont chacune respectivement en prise avec des ouvertures (37) ménagées à cet effet dans la jupe (13) de ce couvercle (11) et s'étendent à compter de la périphérie externe de la rondelle (31) de la pièce auxiliaire (30).

8. Mécanisme d'embrayage suivant la revendication 7, **caractérisé en ce que** les pattes (36) par lesquelles la pièce auxiliaire (30) est calée en rotation sur le plateau de pression (15) sont chacune respectivement insérées entre deux des bossages (20) que présente ce plateau de pression (15) et s'étendent à compter de la périphérie interne de la rondelle (31) de la pièce auxiliaire (30).

9. Mécanisme selon la revendication 8 et la revendication 3, **caractérisé en ce que** les dites pattes (36) ont une longueur supérieure à celle des pattes d'encliquetage (32) et sont décalées axialement par rapport à la rondelle (31) de la pièce auxiliaire (30) en étant plus proche du fond (12) du couvercle (11).

10. Mécanisme d'embrayage suivant l'une quelconque des revendications 1 à 9, **caractérisé en ce que**, des moyens de rappel axial (28) étant associé au plateau de pression (15), ces moyens de rappel axial (28) appartiennent d'un seul tenant à la pièce auxiliaire (30) à laquelle appartiennent les moyens de blocage circonférentiel (27) et **en ce que** les moyens de rappel axial (28) du plateau de pression (15) résultent au moins pour partie de ce que la pièce auxiliaire (30) est élastiquement déformable axialement.

11. Mécanisme d'embrayage suivant la revendication 10, **caractérisé en ce que** la pièce auxiliaire (30) forme par elle même une rondelle Belleville.

12. Mécanisme d'embrayage suivant la revendication 11 ou 12, **caractérisé en ce que** les moyens de rappel axial (28) du plateau de pression (15) comportent des pattes (39) par lesquelles la pièce auxiliaire (30) est crochetée sur le diaphragme (16).

## Patentansprüche

1. Kupplungsmechanismus, umfassend, in Form von ringförmigen Teilen, einen Deckel (11), der in Querrichtung einen Boden (12) und in Umfangsrichtung eine insgesamt axial ausgerichtete Einfassung (13) aufweist, eine Druckplatte (15), die im Verhältnis zum Deckel (11) axial beweglich gelagert ist, und eine Membranfeder (16), die am Boden (12) des Deckels (11) zur Anlage kommt und die auf Vorsprüngen (20) anliegt, welche die Druckplatte (15) aufweist, mit der Druckplatte (15) zugeordneten Umfangssicherungsmitteln (27), durch die sie drehfest am Deckel (11) angebracht ist, wobei die Umfangssicherungsmittel (27) der Druckplatte (15) einstückig zu einem Hilfsteil (30) gehören, das unabhängig an dieser Druckplatte (15) angebracht ist,
**dadurch gekennzeichnet,**
**daß** für die Bildung der Umfangssicherungsmittel (27) der Druckplatte (15) das Hilfsteil (30) einerseits Ansätze (35), durch die es drehfest am Deckel (11) angebracht ist, und andererseits Ansätze (36) umfaßt, durch die es drehfest an der Druckplatte (15) angebracht ist.

2. Kupplungsmechanismus nach Anspruch 1, **dadurch gekennzeichnet, daß** das Hilfsteil (30) ein ringförmiges Teil ist, das kreisförmig durchgehend eine Scheibe (31) umfaßt.

3. Kupplungsmechanismus nach Anspruch 2, **dadurch gekennzeichnet, daß** das Hilfsteil (30) durch Verrastung an der Druckplatte (15) anhand von Rastansätzen (32) angefügt ist, die sich in etwa radial vom inneren Umfang seiner Scheibe (31) aus erstrecken.

4. Kupplungsmechanismus nach Anspruch 3, **dadurch gekennzeichnet, daß** die Rastansätze (32) mit einer, gegebenenfalls unterteilten, Nut (33) der Druckplatte (15) in Eingriff kommen, wobei die besagte Nut eine Austiefung aufweist, die in der zur Achse (A) der Baueinheit entgegengesetzten Richtung gerichtet ist.

5. Kupplungsmechanismus nach Anspruch 4, **dadurch gekennzeichnet, daß** sich die Rastansätze (32) entlang der Ebene der Scheibe (31) des Hilfsteils (30) erstrecken, wobei sie örtliche Verlängerungen dieser Scheibe bilden.

6. Kupplungsmechanismus nach Anspruch 4 oder 5, **dadurch gekennzeichnet, daß** vor der Nut (33) der Druckplatte (15) ein Eingriffsprofil (34) vorgesehen ist.

7. Kupplungsmechanismus nach einem der Ansprüche 1 bis 6, **dadurch gekennzeichnet, daß** die Ansätze (35), durch die das Hilfsteil (30) drehfest am Deckel (11) angebracht ist, jeweils mit Öffnungen (37), die dazu in die Einfassung (13) dieses Deckels (11) eingearbeitet sind, in Eingriff kommen und sich vom äußeren Umfang der Scheibe (31) des Hilfsteils (30) aus erstrecken.

8. Kupplungsmechanismus nach Anspruch 7, **dadurch gekennzeichnet, daß** die Ansätze (36), durch die das Hilfsteil (30) drehfest an der Druckplatte (15) angebracht ist, jeweils zwischen zwei Vorsprüngen (20), die diese Druckplatte (15) aufweist, eingesetzt sind und sich vom inneren Umfang der Scheibe (31) des Hilfsteils (30) aus erstrecken.

9. Kupplungsmechanismus nach Anspruch 8 und nach Anspruch 3, **dadurch gekennzeichnet, daß** die besagten Ansätze (36) eine größere Länge als die Rastansätze (32) aufweisen und im Verhältnis zur Scheibe (31) des Hilfsteils (30) axial versetzt sind, wobei sie sich näher am Boden (12) des Deckels (11) befinden.

10. Kupplungsmechanismus nach einem der Ansprüche 1 bis 9, **dadurch gekennzeichnet, daß**, insoweit axiale Rückstellmittel (28) mit der Druckplatte (15) verbunden sind, diese axialen Rückstellmittel (28) einstückig zum Hilfsteil (30) gehören, zu dem die Umfangssicherungsmittel (27) gehören, und daß die axialen Sicherungsmittel (28) der Druckplatte (15) wenigstens teilweise daraus hervorgehen, daß das Hilfsteil (30) axial elastisch verformbar ist.

11. Kupplungsmechanismus nach Anspruch 10, **dadurch gekennzeichnet, daß** das Hilfsteil (30) selbst eine Tellerfeder bildet.

12. Kupplungsmechanismus nach Anspruch 11 oder 12, **dadurch gekennzeichnet, daß** die axialen Rückstellmittel (28) der Druckplatte (15) Ansätze (39) umfassen, durch die das Hilfsteil (30) an der Membranfeder (16) eingehakt ist.

## Claims

1. A clutch mechanism of the kind comprising, in the form of annular components, a cover plate (11) which has a transverse base (12) and a generally axially oriented peripheral skirt (13), a pressure plate (15) which is mounted for radial movement with respect to the cover plate (11), and a diaphragm (16) which bears on the base (12) of the cover plate (11) and bears elastically on bosses (20) of the pressure plate (15), with, associated with the pressure plate (15), circumferential blocking means (27) by which it is mounted in rotation on the cover plate (11), wherein the circumferential blocking means of the pressure plate (15) are an integral part of an auxiliary member (30) which is autonomously engaged on the pressure plate (15), **characterised in that**, for constituting the circumferential blocking means (27) for the pressure plate (15), the auxiliary member (30) includes, firstly, lugs (35) by which it is mounted in rotation on the cover plate (11), and secondly, lugs (36) by which it is mounted in rotation on the pressure plate (15).

2. A clutch mechanism according to Claim 1, **characterised in that** the auxiliary member (30) is an annular component comprising a continuous circular ring (31).

3. A clutch mechanism according to Claim 2, **characterised in that** the auxiliary member (30) is snap-fitted in the pressure plate (15) by means of snap-fitting lugs (32) which extend substantially radially from the inner periphery of its ring (31).

4. A clutch mechanism according to Claim 3, **characterised in that** the snap-fitting lugs (32) make engagement with a groove (33), which may be of divided form, of the pressure plate (15), the said groove having a concavity facing in a direction away from the axis (A) of the assembly.

5. A clutch mechanism according to Claim 4, **characterised in that** the snap-fitting lugs (32) lie in the plane of the ring (31) of the auxiliary member (30), to constitute local extensions of the latter.

6. A clutch mechanism according to Claim 4 or Claim 5, **characterised in that** the groove (33) in the pressure plate (15) is preceded by an engagement profile (34).

7. A clutch mechanism according to any one of Claims 1 to 6, **characterised in that** each of the lugs (35) by which the auxiliary member is mounted in rotation on the cover plate (11) is in engagement with a respective one of a plurality of openings (37), formed for this purpose in the skirt (13) of the cover plate (11) and extending from the outer periphery of the ring (31) of the auxiliary member (30).

8. A clutch mechanism according to Claim 7, **characterised in that** each of the lugs (36) by which the auxiliary member (30) is mounted on the pressure plate (15) is inserted between a respective pair of the bosses (20) of the pressure plate (15), and extends from the inner periphery of the ring (31) of the auxiliary member (30).

9. A clutch mechanism according to Claim 8 and Claim 3, **characterised in that** the said lugs (36) have a length greater than that of the snap-fitting lugs (32), and are offset axially with respect to the ring (31) of the auxiliary member (30), being closer to the base (12) of the cover plate (11).

10. A clutch mechanism according to any one of Claims 1 to 9, **characterised in that**, axial return means (2) being associated with the pressure plate (15), the said axial return means (28) are an integral part of the auxiliary member (30) of which the circumferential blocking means (27) form a part, and **in that** the axial return means (28) for the pressure plate (15) result at least partly from the fact that the auxiliary member (30) is resiliently deformable in the axial direction.

11. A clutch mechanism according to Claim 10, **characterised in that** the auxiliary member (30) constitutes a Belleville ring by itself.

12. A clutch mechanism according to Claim 11 or Claim 12 *[sic]*, **characterised in that** the axial return means (28) for the pressure plate (15) comprise lugs (39) by which the auxiliary member (30) is clipped on the diaphragm (16).
